# EUROPEAN PATENT SPECIFICATION

(11) **EP 2 716 606 B1**
(45) Date of publication and mention of the grant of the patent: **04.12.2019**
(21) Application number: 12792771.3
(22) Date of filing: 23.05.2012
(51) Int. Cl.: C02F 1/467, C02F 1/46, C02F 1/72, H05H 1/24, H05H 1/46, H05H 1/48

(54) **UNDERWATER CAPILLARY PLASMA DEVICE**
UNTERWASSER KAPILLARPLASMAVORRICHTUNG
DISPOSITIF IMMERGÉ À PLASMA CAPILLAIRE

(30) Priority: 31.05.2011 KR 20110052089
(43) Date of publication of application: 09.04.2014
(73) Proprietor: Korea Basic Science Institute, Daejeon 305-806 (KR)
(72) Inventor: HONG, Yong Cheol, Daejeon 305-806 (KR); KIM, Ye Jin, Daejeon 305-806 (KR); LEE, Sang Ju, Daejeon 305-806 (KR); LEE, Bong Ju, Daejeon 305-806 (KR)
(74) Representative: Isarpatent
(86) International application number: PCT/KR2012/004073
(87) International publication number: WO 2012/165799

(56) References cited:
- WO-A1-2007/048808
- WO-A1-2009/036579
- JP-A- 2000 260 396
- KR-A- 20090 054 483
- KR-A- 20090 110 060
- KR-A- 20090 110 060
- KR-B1- 100 924 649
- US-A- 5 630 915
- US-A1- 2005 189 278
- SUN B ET AL: "Optical study of active species produced by a pulsed streamer corona discharge in water", JOURNAL OF ELECTROSTATICS, ELSEVIER SCIENCE PUBLISHERS B.V. AMSTERDAM, NL, vol. 39, no. 3, 1 July 1997 (1997-07-01), pages 189-202, XP004068487, ISSN: 0304-3886, DOI: 10.1016/S0304-3886(97)00002-8

## Description

### CROSS-REFERENCE TO RELATED APPLICATION

This application claims priority to and the benefit of Republic of Korea Patent Application No. 10-2011-0052089, filed on May 31, 2011.

### BACKGROUND

### [Technical Field]

The present invention relates to an underwater capillary plasma device, and more particularly, to the technology for effectively purifying polluted water by equipping an underwater capillary plasma discharge electrode with a gas channel, in particular an underwater capillary plasma device according to the preamble of claim 1, which is known from US 2005/189278 A1.

### [Background Art]

In recent years, research on various methods has been conducted for purification of polluted water and removal of bacteria. For example, these methods include a method using ozone, a method of adding a chemical such as hypochlorous acid (HClO) to polluted water, a method using ultraviolet rays, a method using heat treatment, and the like.

However, such methods have problems in that the sufficient purification performance of the methods cannot be obtained, the excessive costs may be required to dispose polluted water, or the unexpected side effects may be caused. Therefore, there is an increasing demand for methods of efficiently purifying polluted water and removing microorganisms such as bacteria.

### [Disclosure]

### [Technical Problem]

Accordingly, the present invention is designed to solve the problems of the prior art, and it is an object of the present invention to provide an underwater capillary plasma device having a gas channel capable of purifying polluted water stably and effectively using underwater capillary plasma discharge.

### [Technical Solution]

According to an aspect of the present invention, there is provided an underwater capillary plasma device with the features of patent claim 1, including a power supply unit configured to supply a power source, a discharge electrode configured to receive the power source supplied from the power supply unit and induce capillary plasma discharge inside a fluid, and a gas supply unit configured to inject an auxiliary gas into the discharge electrode.

### [Advantageous Effects]

According to exemplary embodiments of the present invention, since the underwater capillary plasma discharge electrode is equipped with a gas channel, plasma species can be generated from water decomposition caused by plasma discharge, and various chemical reactive species can be generated according to the injected auxiliary gas, thereby effectively removing underwater pollutants. Also, when a gas is injected as described herein, the reactive species generated by the plasma discharge can be increased in concentration and lifetime in the fluid so that a purification effect using plasma can be maximized. Further, when the auxiliary gas is supplied as described above, plasma can be generated even by a smaller supply of power, compared with when the auxiliary gas is not injected, thereby reducing energy consumption for purification of the fluid.

### [Description of Drawings]

FIG. 1 is a block diagram illustrating an underwater capillary plasma device 100
FIG. 2 is a diagram showing a first example of a discharge electrode 104 and a gas supply unit 106 of the underwater capillary plasma device 100.
FIG. 3 is a diagram showing a second example of the discharge electrode 104 and the gas supply unit 106 of the underwater capillary plasma device 100.
FIG. 4 is a diagram showing an exemplary embodiment of the discharge electrode 104 and the gas supply unit 106 of the underwater capillary plasma device 100 according to the present invention.
FIG. 5 is a diagram showing a third example of the discharge electrode 104 and the gas supply unit 106 of the underwater capillary plasma device 100.
FIG. 6 is a diagram showing the concentration of reactive species generated inside a fluid when a gas is supplied into the gas supply unit 106.
FIG. 7 is a diagram showing the concentration of reactive species generated inside a fluid when nitrogen (N₂) gas is supplied into the gas supply unit 106.
FIG. 8 is a diagram showing the concentration of reactive species generated inside a fluid when air is supplied into the gas supply unit 106.
FIG. 9 is a graph illustrating the comparison of the total Cl contents in the fluid when various kinds of gases are injected into the gas supply unit 106.
FIG. 10 is a graph illustrating the results obtained by comparing the cell numbers of *E*. *coli* according to the gases supplied into the gas supply unit 106.

### [Best Mode]

Hereinafter, preferred exemplary embodiment of the present invention will be described in further detail with reference to the accompanying drawings. However, the description proposed herein is just a preferable example for the purpose of illustrations only, not intended to limit the scope of the invention.

In describing the present invention, detailed descriptions with respect to known functions or constructions of the present invention will be omitted when the detailed descriptions are considered to make the gist of the present invention unclear. In addition, the terminology used herein is defined in consideration of the functions or constructions in the present invention, and may be altered according to the users' or operators' intentions and practice. Accordingly, the definitions of these terms therefore may be determined based on the contents throughout the specification.

Thus, the scope of this invention should be determined by the appended claims and their legal equivalents. Therefore, it will be appreciated that the scope of the present invention fully encompasses other embodiments which may become obvious to those skilled in the art to which the present invention belongs.

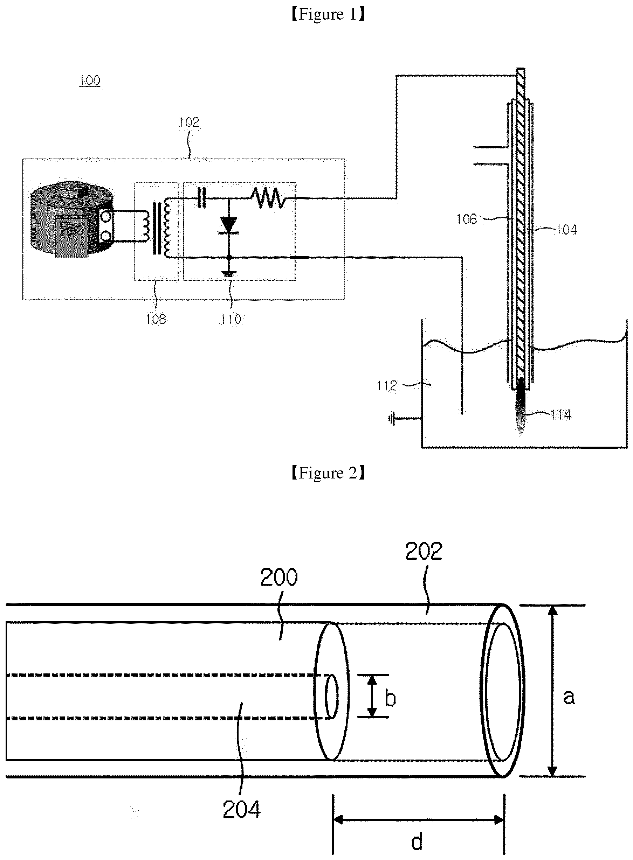

FIG. 1 a block diagram illustrating an exemplary underwater capillary plasma device 100.

As shown in FIG. 1, the underwater capillary plasma device 100 according to an example includes a power supply unit 102, a discharge electrode 104, and a gas supply unit 106.

The power supply unit 102 serves to receive a power source (for example a common alternating current (AC) power source), convert the power source into a direct current (DC) or AC power source having a voltage with a predetermined size, and output the DC or AC power source. Although one example of a circuit configured to convert an externally input power source into a DC power source having a predetermined voltage is shown in this example as shown in FIG. 1, the power supply unit 102 may also be used in a circuit configured to output the AC power source. In this example, the power supply unit 102 may be configured to include a transformer 108 and a rectifier 110, both of which are configured to amplify the voltage of the input power source. However, this is merely one example for the purpose of illustration, the power supply unit 102 may be configured to have a proper shape according to the kind and voltage of the power source to be input, and the kind of the power source to be output, and the like.

The discharge electrode 104 serves to purify a fluid 112 such as polluted water by receiving the power source supplied from the power supply unit 102, and inducing capillary plasma discharge 114 inside the polluted fluid 112. Plasma generated by such capillary plasma discharge decomposes water molecules in the fluid 112 to generate reactive species such as OH⁻, O, H, H₂O₂, HO₂, HClO, Cl₂, HCl, and the like. In this case, the generated reactive species serve to remove pollutants (i.e., volatile organic compounds, microorganisms, algae, etc.) in the fluid.

The gas supply unit 106 serves to inject an auxiliary gas into the fluid 112 in which capillary plasma discharge takes place by means of the discharge electrode 104. Examples of such an auxiliary gas may include ozone (O₃), oxygen (O₂), nitrogen (N₂), argon (Ar), helium (He), air, and a mixture thereof. Here, hydrogen peroxide (H₂O₂) in a liquid phase may also be used in the gas supply unit 106. The auxiliary gas injected thus is supplied into the plasma generated in the discharge electrode 104, thereby aiding in generating the plasma and purifying the fluid 112 using the plasma. That is, when the auxiliary gas is injected as described above, the reactive species in the fluid 112 may be increased in concentration and lifetime in the fluid, compared with when the auxiliary gas is not injected. Therefore, a purification effect of the fluid 112 by the plasma may be maximized. In addition, when the auxiliary gas is supplied as described above, the plasma may be generated even by a smaller supply of power, compared with when the auxiliary gas is not injected, thereby reducing energy consumption for purification of the fluid.

FIG. 2 is a diagram showing a first example of a discharge electrode 104 and a gas supply unit 106 of the underwater capillary plasma device 100.

As shown in FIG. 2, the discharge electrode 104 is configured to include a metal tip 200, and a dielectric tube 202.

The metal tip 200 is electrically connected to an output terminal of the power supply unit 102, and may be formed of a metal material, for example, at least one selected from the group consisting of tungsten, molybdenum, titanium, and stainless steel (SUS). Such a material forming the metal tip 200 may be determined in consideration of the shape and size of the metal tip 200, the processability or cost of the metal material, and the like. For example, the metal tip 200 may be formed of stainless steel having good processability, and an end portion of the metal tip 200 in which the plasma is generated may be formed of tungsten having high wear resistance.

The dielectric tube 202 is formed in a cylindrical shape to surround the metal tip 200, and protrudes from an end of the metal tip 200 by a certain length (d). That is, an end portion of the metal tip 200 is formed so that the end portion can be recessed inwards from the dielectric tube 202 by the length (d). The length (d) may be properly determined in consideration of fine foams generated inside the dielectric tube 202, and a discharge effect taking place in the fine foams, and thus may be in a range of approximately 2 mm to 4 mm. Such a dielectric tube 202 may be, for example, formed of alumina or quartz. The dielectric tube 202 may be formed with a diameter (a) of approximately 2 mm to 4 mm.

Meanwhile, the gas supply unit 106 includes a gas supply pipe 204 configured to supply an auxiliary gas into a fluid. According to this example, the gas supply pipe 204 is formed through the metal tip 200 in a longitudinal direction, and thus is configured to directly supply the auxiliary gas into the plasma generated at the end portion of the metal tip 200. The gas supply pipe 204 may be formed with a diameter (b) of approximately 0.7 mm to 1.2 mm.

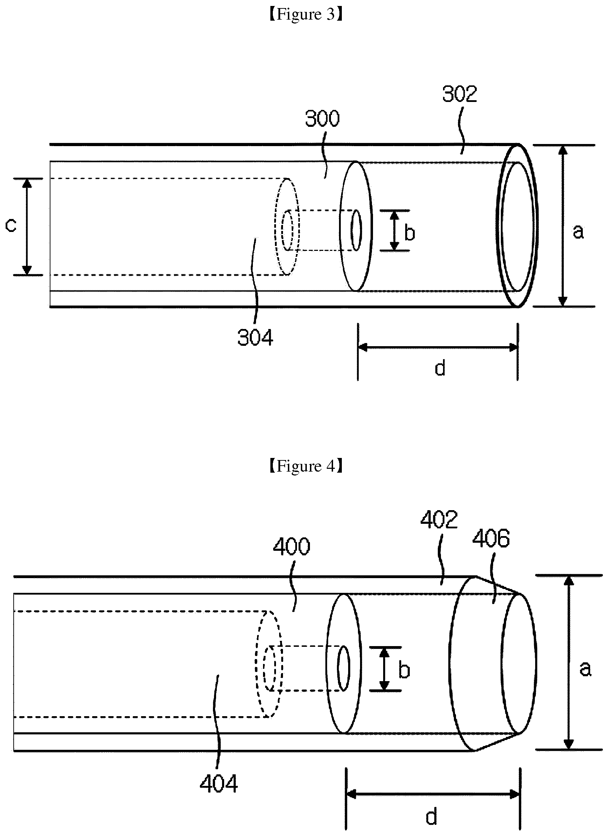

FIG. 3 is a diagram showing a second example of the discharge electrode 104 and the gas supply unit 106 of the underwater capillary plasma device 100.

Like in the first example, this example is also configured to include a metal tip 300, a dielectric tube 302, and a gas supply pipe 304. As shown in FIG. 3, compared with the first example, the shape of the gas supply pipe 304 is different from that of the gas supply pipe 204. In this example, an end portion of the gas supply pipe 304 which contacts with the fluid is tapered in diameter. That is, in FIG. 3, the relationship of c > b (wherein c represents an inner diameter of the gas supply pipe 304, and b represents a diameter of a gas outlet portion of the gas supply pipe 304) is established. As described above, when the end portion of the gas supply pipe 304 can be tapered in diameter, the flow rate of the auxiliary gas may increase at the corresponding portion, which makes it possible to supply the auxiliary gas into the plasma more smoothly.

FIG. 4 is a diagram showing an exemplary embodiment of the discharge electrode 104 and the gas supply unit 106 of the underwater capillary plasma device 100 according to the present invention.

Like in the first and second examples, this exemplary embodiment is also configured to include a metal tip 400, a dielectric tube 402, and a gas supply pipe 404. However, the shape of the dielectric tube 402 is different from those of the dielectric tubes 202 and 302, compared with the first and second examples. That is, in this case of this exemplary embodiment, an end 406 of the dielectric tube 402 coming in contact with the fluid is formed so that the end 406 of the dielectric tube 402 is sloped in a direction spanning from an inner circumferential surface to an outer circumferential surface of a cylinder constituting the dielectric tube 402. When an inclined plane is formed at an end portion of the dielectric tube 402 as described above, the wear of the dielectric tube 402 by the plasma may be reduced. Meanwhile, the gas supply pipe 404 is shown in FIG. 4 so that the shape of the gas supply pipe 404 can be identical to that of the gas supply pipe 304 according to the second example. However, this is merely one example for the purpose of illustration, a gas supply pipe having the shape as shown in FIG. 2 may be also used herein.

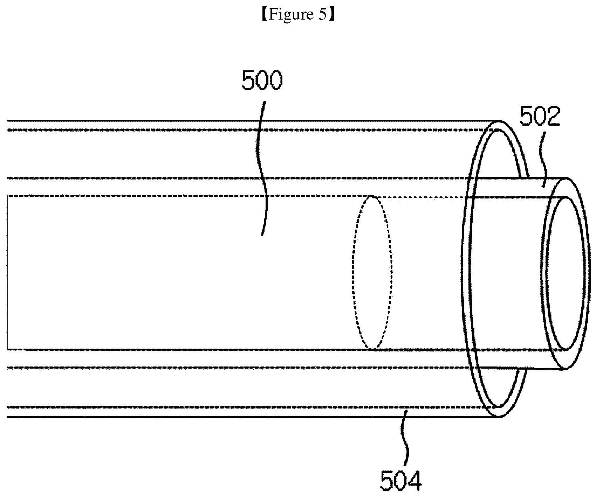

FIG. 5 is a diagram showing a third example of the discharge electrode 104 and the gas supply unit 106 of the underwater capillary plasma device 100.

According to this example, the gas supply pipe 404 is not formed through the inside of a metal tip 500, but formed in a cylindrical shape to surround the dielectric tube 502. When the gas supply pipe 504 is formed as described above, an auxiliary gas is not directly injected into the plasma generated at an end portion of the metal tip 500, but is supplied in such a manner that the auxiliary gas surrounds the plasma.

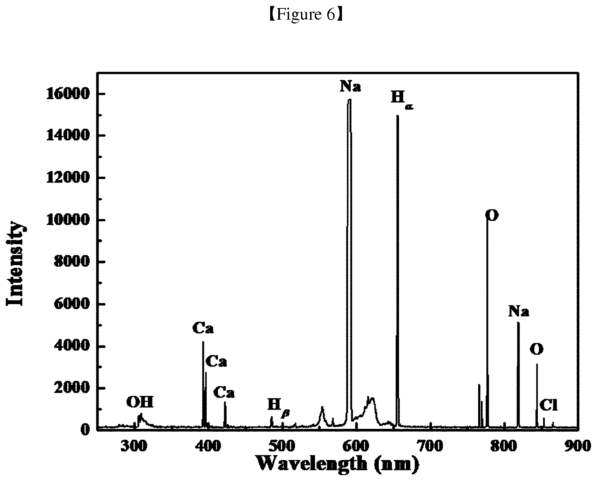

FIGS. 6 to 10 are diagrams illustrating the effects of the underwater capillary plasma device 100.

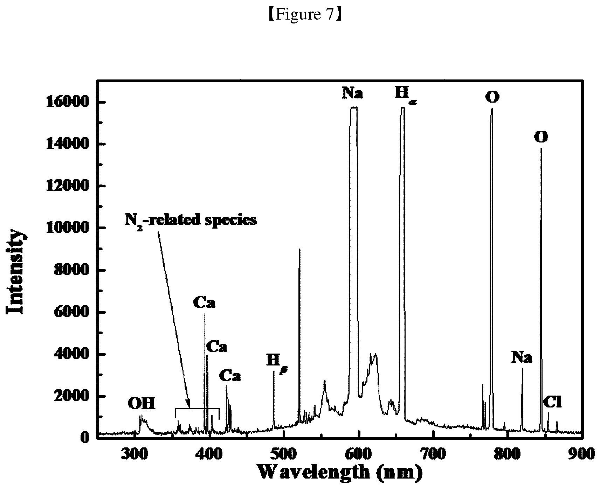

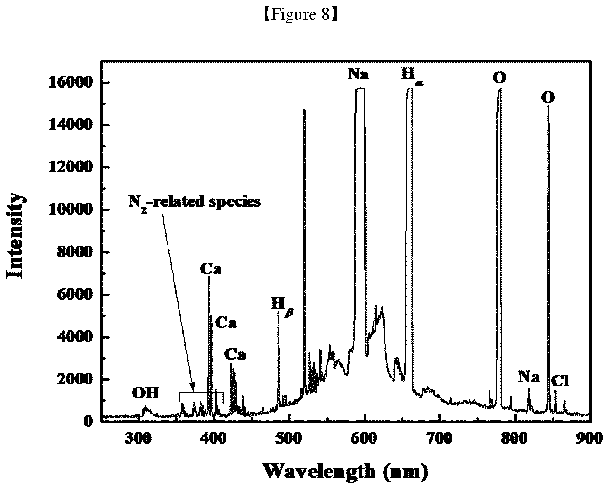

First, FIG. 6 is a diagram showing the concentration of reactive species generated inside a fluid when a gas is supplied into the gas supply unit 106, FIG. 7 is a diagram showing the concentration of reactive species generated inside a fluid when nitrogen (N₂) gas is supplied into the gas supply unit 106, and FIG. 8 is a diagram showing the concentration of reactive species generated inside a fluid when air is supplied into the gas supply unit 106. As shown in FIGS. 6 to 8, it could be seen that the concentrations of O and OH increase when nitrogen or air is supplied into the gas supply unit 106.

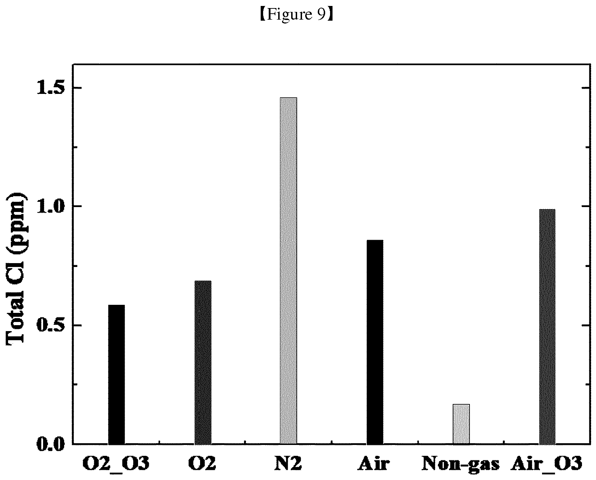

FIG. 9 is a graph illustrating the comparison of the Cl contents in the fluid when various kinds of gases are injected into the gas supply unit 106. In FIG. 9, O₂_O₃ represents the Cl content in the fluid when ozone gas generated from oxygen is injected, and Air_O₃ represents the Cl content in the fluid when ozone gas generated from air is injected. As shown in FIG. 9, it could be seen that the total content of Cl serving as a disinfectant increases when a gas such as (non-gas) oxygen, nitrogen, air, or ozone is injected, compared with when the gas is not injected.

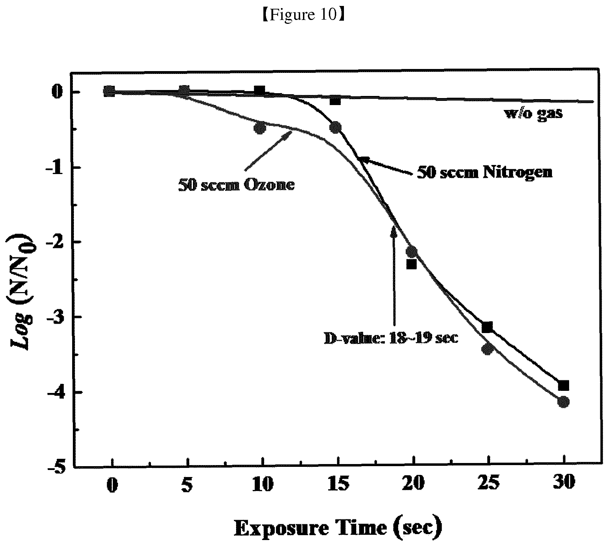

FIG. 10 is a graph illustrating the results obtained by comparing the cell numbers of *E*. *coli* according to the gases supplied into the gas supply unit 106. As shown in FIG. 10, it could be seen that the cell number of *E. coli* in the fluid does not decrease when the gas is not supplied (w/o gas), whereas the cell number of *E*. *coli* in the fluid suddenly decreases starting from a point of time after the lapse of approximately 15 seconds when nitrogen or ozone is supplied at a rate of 50 sccm or 50 sccm, respectively.

As described above, the underwater capillary plasma device having a gas channel according to the present invention can be widely used for purification of ballast water, sterilization of water used in medical instruments, dishes, humidifiers, and the like, and other applications such as waste water disposal.

Although the present invention has been described above in further detail with reference to the ideal exemplary embodiments, it should be understood by those skilled in the related art to which the present invention pertains that various changes and modifications will be made to the above-described exemplary embodiments without departing from the scope of the present invention.

Thus, it is intended that the present invention covers all such modifications provided they come within the scope of the appended claims. The invention is defined by the claims.

### [Brief Description of Major Parts in Drawings]

100: underwater capillary plasma device
102: power supply unit
104: discharge electrode
106: gas supply unit
200, 300, 400, 500 : metal tip
202, 302, 402, 502 : dielectric tubes
204, 304, 404, 504 : gas supply pipes

## Claims

1. An underwater capillary plasma device (100) comprising:
a power supply unit (102) configured to supply a power source;
a discharge electrode (104) configured to receive, in use, the power source supplied from the power supply unit (102) and induce capillary plasma discharge inside a fluid (112); and
a gas supply unit (106) configured to inject an auxiliary gas into the fluid (112) in which capillary plasma discharge takes place, in use, by means of the discharge electrode (104),
wherein the discharge electrode (104) comprises:
a metal tip (400) electrically connected to an output terminal of the power supply unit (102); and
a cylindrically shaped dielectric tube (402) arranged to surround the metal tip (400) and protrude from an end of the metal tip (400) by a certain length (d),
**characterized in that**
an end (406) of the dielectric tube (402) coming in contact with the fluid (112) is formed so that the end of the dielectric tube (402) is sloped in a direction spanning from an inner circumferential surface to an outer circumferential surface of a cylinder constituting the dielectric tube (402) such that, in use, the wear of the dielectric tube (402) by the plasma is reduced.

2. The underwater capillary plasma device (100) of claim 1, wherein the metal tip (400) is formed of at least one material selected from the group consisting of tungsten, molybdenum, titanium, and stainless steel (SUS).

3. The underwater capillary plasma device (100) of claim 1, wherein the dielectric tube (402) is formed of at least one material selected from the group consisting of alumina,

4. The underwater capillary plasma device (100) of claim 1, wherein the gas supply unit (106) comprises a gas supply pipe (404) formed through the metal tip (400).

5. The underwater capillary plasma device (100) of claim 4, wherein the gas supply pipe (404) is formed so that an end portion of the gas supply pipe (404) coming in contact with the fluid (112) is tapered in diameter.

6. The underwater capillary plasma device (100) of claim 1, wherein the gas supply unit (106) is configured to supply a gas including at least one selected from the group consisting of ozone (O₃), oxygen (O₂), nitrogen (N₂), argon (Ar), helium (He), and air into the fluid (112).

7. The underwater capillary plasma device (100) of claim 1, wherein the gas supply unit (106) is configured to inject hydrogen peroxide in a liquid phase into the fluid (112).

## Patentansprüche

1. Unterwasserkapillarplasmavorrichtung (100), umfassend:
eine Stromversorgungseinheit (102), die dafür ausgebildet ist, einen Versorgungsstrom zuzuführen;
eine Entladungselektrode (104), die dafür ausgebildet ist, während des Betriebes den von der Stromversorgungseinheit (102) zugeführten Versorgungsstrom zu empfangen und eine Kapillarplasmaentladung im Inneren eines Fluids (112) zu induzieren; und
eine Gaszufuhreinheit (106), die dafür ausgebildet ist, ein Hilfsgas in das Fluid (112) einzuleiten, in dem während des Betriebes die Kapillarplasmaentladung mittels der Entladungselektrode (104) stattfindet ,
wobei die Entladungselektrode (104) Folgendes umfasst:
eine Metallspitze (400), die elektrisch mit einem Ausgangsanschluss der Stromversorgungseinheit (102) verbunden ist; und
eine zylindrisch geformte dielektrische Röhre (402), die so angeordnet ist, dass sie die Metallspitze (400) umgibt und um eine bestimmte Länge (d) von einem Ende der Metallspitze (400) vorsteht,
**dadurch gekennzeichnet, dass**
ein Ende (406) der dielektrischen Röhre (402), das mit dem Fluid (112) in Kontakt kommt, so ausgebildet ist, dass das Ende der dielektrischen Röhre (402) in einer Richtung geneigt ist, die sich von einer Innenumfangsfläche zu einer Außenumfangsfläche eines Zylinders, der die dielektrische Röhre (402) bildet, erstreckt, dergestalt, dass während des Betriebes der Verschleiß der dielektrischen Röhre (402) durch das Plasma reduziert wird.

2. Unterwasserkapillarplasmavorrichtung (100) nach Anspruch 1, wobei die Metallspitze (400) aus mindestens einem Material hergestellt ist, das ausgewählt ist aus der Gruppe bestehend aus Wolfram, Molybdän, Titan und Edelstahl (SUS).

3. Unterwasserkapillarplasmavorrichtung (100) nach Anspruch 1, wobei die dielektrische Röhre (402) aus mindestens einem Material hergestellt ist, das ausgewählt ist aus der Gruppe bestehend aus Aluminiumoxid und Quarz.

4. Unterwasserkapillarplasmavorrichtung (100) nach Anspruch 1, wobei die Gaszufuhreinheit (106) ein Gaszuleitungsrohr (404) umfasst, das durch die Metallspitze (400) gebildet wird.

5. Unterwasserkapillarplasmavorrichtung (100) nach Anspruch 4, wobei das Gaszuleitungsrohr (404) dergestalt ausgebildet ist, dass ein Endabschnitt des Gaszuleitungsrohres (400), das mit dem Fluid (112) in Kontakt kommt, einen verjüngten Durchmesser aufweist.

6. Unterwasserkapillarplasmavorrichtung (100) nach Anspruch 1, wobei die Gaszufuhreinheit (106) dafür ausgebildet ist, ein Gas, das mindestens ein Element enthält, das ausgewählt ist aus der Gruppe bestehend aus Ozon (O₃), Sauerstoff (O₂), Stickstoff (N₂), Argon (Ar), Helium (He) und Luft, in das Fluid (112) einzuleiten.

7. Unterwasserkapillarplasmavorrichtung (100) nach Anspruch 1, wobei die Gaszufuhreinheit (106) dafür ausgebildet ist, Wasserstoffperoxid in einer flüssigen Phase in das Fluid (112) einzuleiten.

## Revendications

1. Dispositif à plasma capillaire sous-marin (100) comprenant :
une unité d'alimentation en puissance (102) configurée pour fournir une source de puissance ;
une électrode de décharge (104) configurée pour recevoir, en utilisation, la source de puissance fournie depuis l'unité d'alimentation en puissance (102) et provoquer une décharge de plasma capillaire à l'intérieur d'un fluide (112) ; et
une unité d'alimentation en gaz (106) configurée pour injecter un gaz auxiliaire dans le fluide (112) dans lequel une décharge de plasma capillaire a lieu, en utilisation, au moyen de l'électrode de décharge (104),
dans lequel l'électrode de décharge (104) comprend :
une pointe en métal (400) connectée électriquement à une borne de sortie de l'unité d'alimentation en puissance (102) ; et
un tube diélectrique de forme cylindrique (402) agencé pour entourer la pointe en métal (400) et faire saillie depuis une extrémité de la pointe en métal (400) sur une certaine longueur (d),
**caractérisé en ce que**
une extrémité (406) du tube diélectrique (402) venant en contact avec le fluide (112) est formée de sorte que l'extrémité du tube diélectrique (402) soit inclinée dans une direction allant d'une surface circonférentielle intérieure à une surface circonférentielle extérieure d'un cylindre constituant le tube diélectrique (402) de sorte que, en utilisation, l'usure du tube diélectrique (402) par le plasma soit réduite.

2. Dispositif à plasma capillaire sous-marin (100) selon la revendication 1, dans lequel la pointe en métal (400) est composée d'au moins un matériau choisi dans le groupe constitué du tungstène, du molybdène, du titane, et de l'acier inoxydable (SUS).

3. Dispositif à plasma capillaire sous-marin (100) selon la revendication 1, dans lequel le tube diélectrique (402) est composé d'au moins un matériau choisi dans le groupe constitué de l'alumine, et du quartz.

4. Dispositif à plasma capillaire sous-marin (100) selon la revendication 1, dans lequel l'unité d'alimentation en gaz (106) comprend une conduite d'alimentation en gaz (404) formée à travers la pointe en métal (400).

5. Dispositif à plasma capillaire sous-marin (100) selon la revendication 4, dans lequel la conduite d'alimentation en gaz (404) est formée de sorte qu'une portion d'extrémité de la conduite d'alimentation en gaz (404) venant en contact avec le fluide (112) ait un diamètre effilé.

6. Dispositif à plasma capillaire sous-marin (100) selon la revendication 1, dans lequel l'unité d'alimentation en gaz (106) est configurée pour fournir un gaz incluant au moins un élément choisi dans le groupe constitué de l'ozone (O₃), de l'oxygène (O₂), de l'azote (N₂), de l'argon (Ar), de l'hélium (He), et de l'air dans le fluide (112).

7. Dispositif à plasma capillaire sous-marin (100) selon la revendication 1, dans lequel l'unité d'alimentation en gaz (106) est configurée pour injecter du peroxyde d'hydrogène en phase liquide dans le fluide (112).
